# EUROPÄISCHE PATENTSCHRIFT

(11) **EP 2 388 218 B1**
(45) Veröffentlichungstag und Bekanntmachung des Hinweises auf die Patenterteilung: **29.05.2013**
(21) Anmeldenummer: 11163801.1
(22) Anmeldetag: 27.04.2011
(51) Int. Cl.: B65G 57/22, B65G 57/26

(54) **Verfahren und Vorrichtung zur Handhabung von Artikeln**
Method and device for handling items
Procédé et dispositif destinés à la manipulation d'articles

(30) Priorität: 20.05.2010 DE 102010022127
(43) Veröffentlichungstag der Anmeldung: 23.11.2011
(73) Patentinhaber: Krones AG, 93073 Neutraubling (DE)
(72) Erfinder: Eschlbeck, Richard, 83569, Vogtareuth (DE)
(74) Vertreter: Benninger, Johannes

(56) Entgegenhaltungen:
- EP-A2- 0 257 447
- WO-A1-2006/096055
- DE-A1- 19 501 637

## Beschreibung

Die vorliegende Erfindung betrifft ein Verfahren zur Handhabung von Artikeln nach dem Oberbegriff des unabhängigen Patentanspruchs 1. Die Erfindung betrifft weiterhin eine Vorrichtung zur Handhabung von Artikeln nach dem Oberbegriff des unabhängigen Anspruchs 3.

Die Übergabe von Gebinde- oder Artikellagen auf Paletten kann auf unterschiedliche Arten erfolgen. Eine bekannte Variante besteht darin, eine Gebindelage zum Zwecke des Beladens auf eine Beladeplatte überzuschieben, welche anschließend über der Palette oder bereits abgesetzte Gebindelagen positioniert wird und dann unter Einwirkung eines Gegenhaltebalkens unterhalb der Gebindelage herausgezogen wird. Dadurch wird die Gebindelage auf die Palette abgesetzt. Es gibt Lagenbilder, die unter Umständen aufgrund der dabei entstehenden Gebindegeometrie keine optimale Ausnutzung der Palettenfläche zulassen. Somit können innerhalb einer Gebindelage Lücken auftreten, die jedoch durch das Einwirken des Lageneinschiebers geschlossen werden, womit im Normalfall keine bündige Außenkontur der Gebinde innerhalb der Lage sichergestellt werden kann.

Die DE 33 00 329 A1 offenbart eine Vorrichtung zum lagenweisen Beladen von Paletten mit Stückgütern. Die Vorrichtung umfasst einen zwischen einer Lagenbereitstellungsstation und einer Palettenbeladestation verfahrbaren Verschiebewagen mit einer die Stückgutlage tragenden und zum Absetzen auf die Stapelstellen unter der Stückgutlage wegziehbaren Plattform. Zwischen der Stückgutlage und der Plattform ist ein Gurtband angeordnet, das synchron mit der Rücklaufbewegung und mit gleicher Geschwindigkeit der sich zurückbewegenden Plattform antreibbar ist. Es wird dabei jedoch in zur Rücklaufbewegung der Plattform entgegen gesetzter Richtung angetrieben. Damit soll sichergestellt werden, dass eine vorgegebene Formation der zu einer Lage zusammengestellten Produkte bei der Abgabe an die Stapelstelle exakt beibehalten wird.

Mit einer solchen Vorrichtung können zwar bündige Lagenbilder erzeugt werden, was jedoch ein bereits bestehendes Lagenbild voraussetzt, das bei der Abgabe an eine Stapelstelle beibehalten werden kann. Um auch aus nicht bündigen Lagenbildern Gebindelagen mit bündigen Au ßenkonturen zu bilden, gibt es zudem Beladesysteme mit geteilten Beladewägen oder sog. geteilten Rollenjalousien. Diese Systeme bedingen jedoch oftmals einen oben liegenden Gebindeeinschub, sind leistungsmäßig eingeschränkt oder benötigen relativ viel Platz.

Die WO 2006/096055 A1 offenbart ein Verfahren zur Handhabung von Artikeln nach dem Oberbegriff des Anspruchs 1, sowie eine Vorrichtung zur Handhabung von Artikeln nach dem Oberbegriff des Anspruchs 3, sowie eine Vorrichtung zum Palletieren von Gütern, die eine Lückenbildung zwischen verschiedenen Reihen einer Güterlage. Die einzelnen Güterlagen werden auf einer Fördergurtplatte, die mit einem Fördergurt und einem verfahrbaren Rahmen ausgestattet ist hin zu einem Palettenbereich gefahren. Fördergurt und Rahmen sind hierbei in gemeinsamer Längsrichtung verfahrbar. Des Weiteren können Anschläge vorgesehen sein, die zur Anlage der jeweiligen Güterreihe an diesen dienen. Zur Ablage einer Güterlage auf der Palette wird der Rahmen, der mitsamt einer Güterlage auf dem Fördergurt über die letzte Palettenlage gefahren wurde wieder von der Palette zurückgezogen, während der Fördergurt in Richtung der Palette mit gleicher Geschwindigkeit wie diese angetrieben wird, und sich die erste Güterreihe ohne relative Verschiebung auf der Palette abgelegt wird. Soll eine nachfolgende Güterreihe mit einem gewissen Abstand bezüglich dieser bereits abgelegten Güterreihe abgelegt werden, kann hierfür der Antrieb des Fördergurtes gestoppt werden, während der Rahmen zusammen mit dem Fördergurt weiter zurückgezogen wird.

Ein Ziel der vorliegenden Erfindung besteht darin, ein Verfahren und eine Vorrichtung zur Handhabung von Artikeln, Stückgütern und Gebinden zur Verfügung zu stellen, mit den deren Hilfe Lagenbilder mit bündigen Außenkonturen und/oder mit definierten Lücken zwischen Artikeln, Stückgütern oder Gebinden erzeugt werden können.

Dieses Ziel der Erfindung wird mit den Gegenständen der unabhängigen Patentansprüche erreicht. Merkmale vorteilhafter Weiterbildungen der Erfindung ergeben sich aus den abhängigen Ansprüchen.

Zur Erreichung des genannten Ziels schlägt die Erfindung ein einteiliges Beladesystem mit einer definierten Erzeugung von Lücken innerhalb einer Artikel-, Stückgut- oder Gebindelage vor. So sieht die Erfindung ein Verfahren zur Handhabung von Artikeln, Stückgütern oder Gebinden und zu deren Lagenbildung beim Beladen von Paletten oder beim Stapeln der Artikel, Stückgüter oder Gebinde vor, bei dem die in jeweils eine Lage abzulegenden und/oder zu stapelnden Artikel, Stückgüter oder Gebinde mittels einer beweglichen Auflageebene zu einer Zielposition auf der Palette oder dem Stapel befördert werden. Die bewegliche Auflageebene verfügt zumindest abschnittsweise über antreibbare und/oder die Artikel, Stückgüter oder Gebinde in eine definierte Richtung bewegende, transportierende bzw. befördernde Auflageelemente. Zudem ist der Auflageebene wenigstens ein an einer Längsseite der Auflageebene angeordnetes Überschubelement zur Bildung eines Anschlags für die Artikel-, Stückgut- oder Gebindelage und/oder zu deren Überschub in Transportrichtung auf die Zielposition auf der Palette oder dem Stapel zugeordnet. Zumindest ein Teil der Auflageelemente der Auflageebene können bspw. durch drehbare und angetriebene Rollen gebildet sein, die gemeinsam oder gruppenweise jeweils in paralleler Richtung variabel gesteuert und angetrieben werden.

Durch das erfindungsgemäße Verfahren wird es ermöglicht, eine Lage von mehreren auf der Auflageebene befindlichen Artikeln, Stückgütern oder Gebinden durch Überschieben der Auflageebene über die Zielposition bei nicht angetriebenen Auflageelementen bzw. Rollen und durch anschließendes Zurückziehen der Auflageebene unter gleichzeitigem Antreiben zumindest eines Teils der Auflageelemente bzw. Rollen in einer entgegen der Rückzugsrichtung der Auflageebene gerichteten Umdrehungsrichtung sowie unter gleichzeitiger Anlage der an das gegenüber der Zielposition fest stehende Überschubelement angrenzenden Artikel, Stückgüter oder Gebinde abzulegen. Die Lage kann dadurch nach Wunsch mit definierter Lückenbildung abgelegt werden, während die Außenkontur der Lage einen geschlossenen Umriss erhalten kann. Dies wird dadurch erreicht, dass durch die angetriebenen Rollen ein Teil der Artikel oder Gebinde an einen Anschlag gefördert wird, solange die bewegliche Auflageebene noch über der Zielposition für die Artikel oder Gebinde ruht. Diese Förderbewegung eines Teilabschnitts der Auflageebene kann während des Zurückbewegens der Auflageebene noch beibehalten werden, um das Wegziehen der Artikel von der Anschlagleiste, welche gleichzeitig einen Seitenabschnitt der Außenkontur der Palettenlage definiert, zu verhindern.

So sieht eine Variante nicht Teil des erfindungsgemäßen Verfahrens vor, die auf der Zielposition abgelegte Lage von Artikeln, Stückgütern oder Gebinden durch Antreiben zumindest eines Teils der Auflageelemente oder Rollen in Richtung einer seitlichen Anlagekante unter Ausbildung einer ungefähr mittig auf der Zielposition befindlichen Lücke während des Zurückziehens der Auflageebene unter Ausbildung einer bis an die Ränder der Zielposition bzw. Lage reichenden Außenkontur auszurichten. Weiterhin kann vorgesehen sein, dass zumindest die Auflageelemente oder Rollen, die unterhalb der randseitig an der seitlichen Anlagekante der Zielposition befindlichen Artikel, Stückgüter oder Gebinde angeordnet sind, kurzzeitig vor dem Zurückziehen und während des Zurückziehens der Auflageebene entgegen der Rückzugsrichtung der Auflageebene angetrieben werden.

Mit Hilfe der vorliegenden Erfindung können nun mit einem einteiligen Ladungsträger lagenweise Gebinde auf die Palette gebracht und zusätzlich Lücken innerhalb einer Gebindelage erzeugt werden. Wahlweise können sogar mehrere Lagen gleichzeitig abgelegt werden, sofern ein Kippen der gestapelten Gebinde zuverlässig verhindert werden kann. Der Ladungsträger, welcher entweder aus einer vollständig angetrieben oder teilweise angetriebenen Rollen besteht, kann nach Übernahme der Stückgutlage die Stückgüter innerhalb eines Zentrierfensters bewegen und somit eine glatte Außenkontur der Gebindelage erzeugen. Dies erfolgt, indem einerseits die Gebinde durch die angetriebene Oberfläche des Ladungsträgers in Richtung des als Anschlag fungierenden Gegenhaltebalkens befördert wird und durch die Bewegung des Ladungsträgers nach der anderen Seite ein Teil der Stückgüter auf die Palette abgelegt wird. Nach einer bestimmten Wegstrecke, auf der sich der Ladungsträger wieder von der Ablageposition weg bewegt, wird die Bewegungsrichtung der angetriebenen des Ladungsträgers Oberfläche entgegengesetzt der ursprünglichen Laufrichtung geändert. Somit bewegen sich die restlichen Stückgüter auf der Oberfläche in Richtung des verschiebbaren und mitsamt dem Ladungsträger bzw. der Auflageebene mitbewegten Abstreifers, während der Ladungsträger weiter von der Ablageposition weg bewegt wird. Die Gebinde legen sich an die Kontur des verschiebbaren Abstreifers an. Ist der Ladungsträger vollständig aus der Gebindelage herausgefahren, liegen die Gebinde mit einer linearen Außenkontur auf der Palette bzw. auf bereits vorher abgelegten Stückgutlagen. Mit den bisher bekannten gebräuchlichen Palettiervorrichtungen mit geteilten Ladungsträgern, die zur Bildung von linearen Außenkonturen der Lagen erforderlich waren, konnten nur dann hohe Leistungen erzielt werden, wenn das Lagenvorbereitungs- bzw. Lageneinschubniveau über der obersten Gebindelage auf der zu beladenden Palette lag. Mit der erfindungsgemäßen Entwicklung einher geht eine Leistungssteigerung für ganzlagige Stückgutbelader mit ungeteiltem Ladungsträger mit einem Lagenvorbereitungsniveau, welches zwischen dem Niveau der Leerpalettentransportebene und der obersten Gebindelage auf der Palette liegt. Diese Leistungssteigerung liegt gegenüber bisherigen Beladern in einem Bereich von 40 Prozent oder mehr.

Neben dem zuvor erläuterten erfindungsgemäßen Verfahren umfasst die vorliegende Erfindung auch eine Vorrichtung zur Handhabung von Artikeln, Stückgütern oder Gebinden und zu deren Lagenbildung beim Beladen von Paletten oder beim Stapeln der Artikel, Stückgüter oder Gebinde. Die Vorrichtung umfasst eine bewegliche Auflageebene für jeweils eine Lage der abzulegenden und/oder zu stapelnden Artikel, Stückgüter oder Gebinde, deren Auflageebene zumindest abschnittsweise über antreibbare und/oder die Artikel, Stückgüter oder Gebinde in eine definierte Richtung bewegende Auflageelemente verfügt. Weiterhin ist der Auflageebene zumindest ein an ihrer Längsseite angeordnetes Überschubelement zur Bildung eines Anschlags für die auf eine Zielposition zu befördernden Artikel-, Stückgut- oder Gebindelage und/oder zu deren Überschub in Transportrichtung auf die Zielposition auf der Palette oder dem Stapel zugeordnet. Diese Auflageelemente können wahlweise bspw. durch drehbare und antreibbare Rollen gebildet sein.

Die Erfindung wird nachfolgend anhand von Ausführungsbeispielen unter Bezugnahme auf die beiliegenden Zeichnungen näher erläutert. Die Figuren illustrieren und verdeutlichen nicht einschränkend zu verstehende Ausführungsbeispiele der vorliegenden Erfindung in ihren Details und Funktionen.
Fig. 1 zeigt in zwei schematischen Ansichten jeweils Anordnungen einer Ausgangs-Lage von zu palettierendem Stückgut und deren End-Lagen auf einer Palette.
Fig. 2 zeigt eine leere Palette und auf einer Auflageebene herantransportiertes Stückgut.
Fig. 3 bis Fig. 6 zeigen das Palettieren einer Stückgutlage, wobei eine definierte Lücke und eine definierte Außenkontur erzeugt werden.

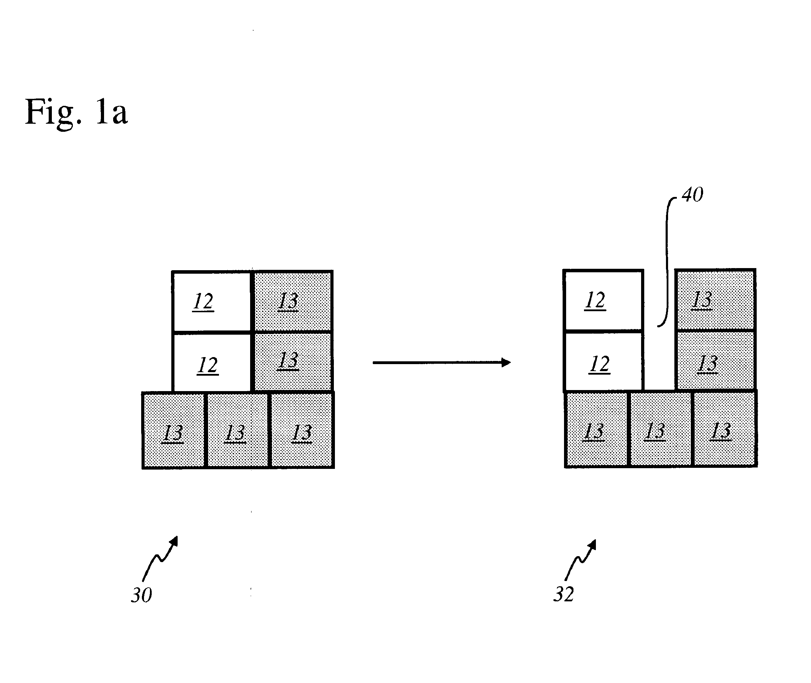

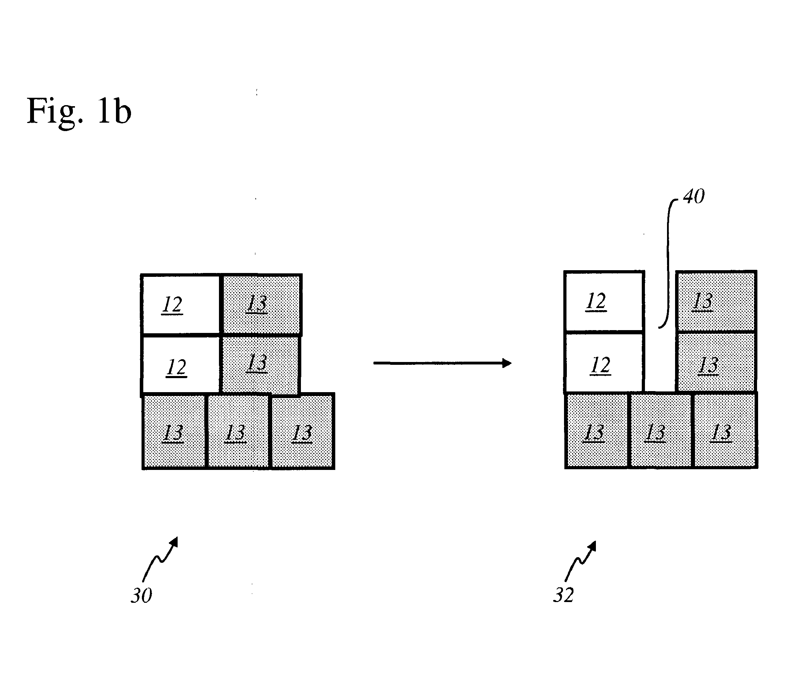

Die Figuren 1 bis 6 stellen das Palettieren einer Ausgangs- Stückgutlage 30 mit einer erfindungsgemäßen Vorrichtung dar, so dass auf der Palette eine End- Lage 32 mit einer definierten Lücke 40 und einer definierten Außenkontur erzeugt wird.

In den beiden Darstellungen der Fig. 1a und der Fig. 1b ist in alternativen Anordnungen dargestellt, dass die Artikel, Stückgüter oder Gebinde 12, 13 in der Ausgangs- Stückgutlage 30 entweder ohne Lücken oder zumindest ohne exakt definierte Positionen beispielsweise aus einem Lager, von einer Gruppierstation, von einem vorgeordneten Sammeltransporteur o. dgl. herantransportiert werden. Nach der Palettierung sollen sie jedoch so angeordnet sein, dass die End-Lage 32 eine definierte, rechteckige Außenkontur aufweist, da eine solche Endlage beim Palettieren deutliche Stabilitätsvorteile, insbesondere bei der Bildung höherer Stapel aufweist. Dafür muss eine Lücke 40 zwischen den Gebinden 12 und 13 erzeugt werden. Diese Lücke 40 wird durch gezieltes Verschieben der Artikel, Stückgüter oder Gebinde 12 erreicht, während die Artikel, Stückgüter oder Gebinde 13 in der ursprünglichen Position wie in der Ausgangs-Stückgutlage 30 verbleiben.

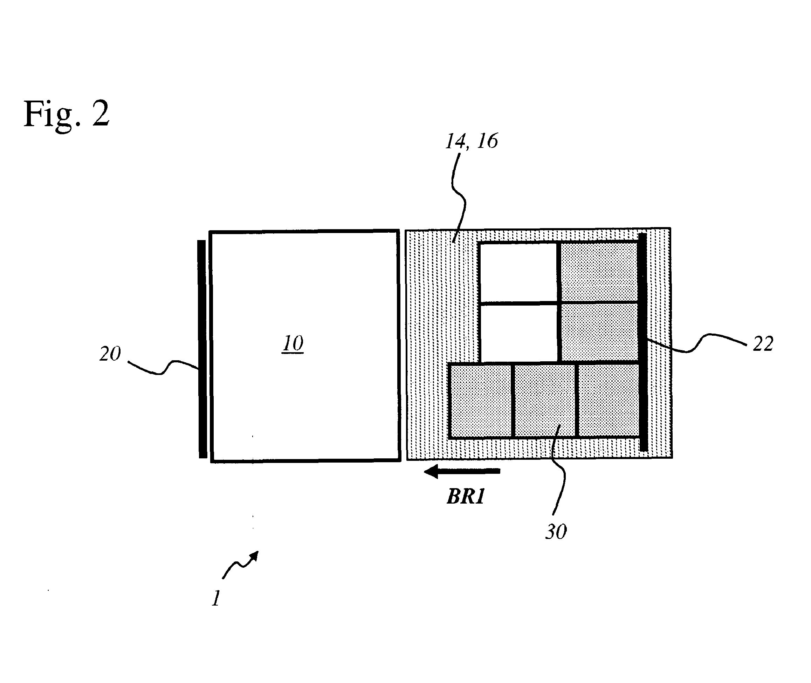

Die Verfahrensschritte zur Erzeugung der Lücke 40 werden in den Figuren 2 bis 6 verdeutlicht. Die Vorrichtung 1 zur Handhabung von Artikeln, Stückgütern oder Gebinden 12, 13 und zu deren Lagenbildung beim Beladen von Paletten 10 oder beim Stapeln der Artikel, Stückgüter oder Gebinde 12, 13 umfasst eine bewegliche Auflageebene 14 für jeweils eine Lage der abzulegenden und/oder zu stapelnden Artikel, Stückgüter oder Gebinde 12, 13 sowie mindestens ein, vorzugsweise zwei Überschubelemente 20, 22.

Die zu beladende Palette 10 wird neben dem ersten Überschubelement 20 angeordnet. Dieses bildet einen Anschlag für die auf eine Zielposition zu befördernden Artikel-, Stückgut- oder Gebindelage 30. Das Überschubelement 22 kann weiterhin dem seitlichen Überschub auf die Zielposition auf der Palette oder dem Stapel dienen.

Die zu palettierende Lage 30 wird durch einen Beladewagen oder eine bewegliche Auflageebene 14 beispielsweise aus einem Lager, aus einer Gruppierstation oder einem Sammeltransporteur o. dgl. herantransportiert. Die Ausgangs- Lage 32 wird auf dem Beladewagen 14 von einem zweiten Überschubelement 22 an einer Seite bereits positionell fixiert. Das Überschubelement 22 kann bspw. durch einen parallel zur Auflageebene 14 schiebbaren Überschubbalken zur Anlage der daran grenzenden Artikel, Stückgüter oder Gebinde 13 gebildet sein. Der Beladewagen 14 und somit die Lage 30 von Artikeln, Stückgütern oder Gebinden 12, 13 werden in Bewegungsrichtung BR1 über die Palette bewegt (Fig. 2).

Die bewegliche Auflageebene 14 verfügt zumindest abschnittsweise über antreibbare und/oder die Artikel 12, 13 in eine definierte Richtung bewegende Auflageelemente 16. Diese Auflageelemente 16 können wahlweise bspw. durch drehbare und antreibbare Rollen gebildet sein. Diese Auflageelemente 16 sind wahlweise gemeinsam oder gruppenweise jeweils in jeweils gleichem Drehsinn variabel steuer- und antreibbar.

Die bewegliche Auflageebene 14 kann nach Übernahme der Stückgutlage 30 die Stückgüter 13 innerhalb eines Zentrierfensters zwischen den beiden Überschubelementen 20, 22 bewegen und somit eine End- Lage 32 mit Lücke 40 und einer glatten Außenkontur erzeugen.

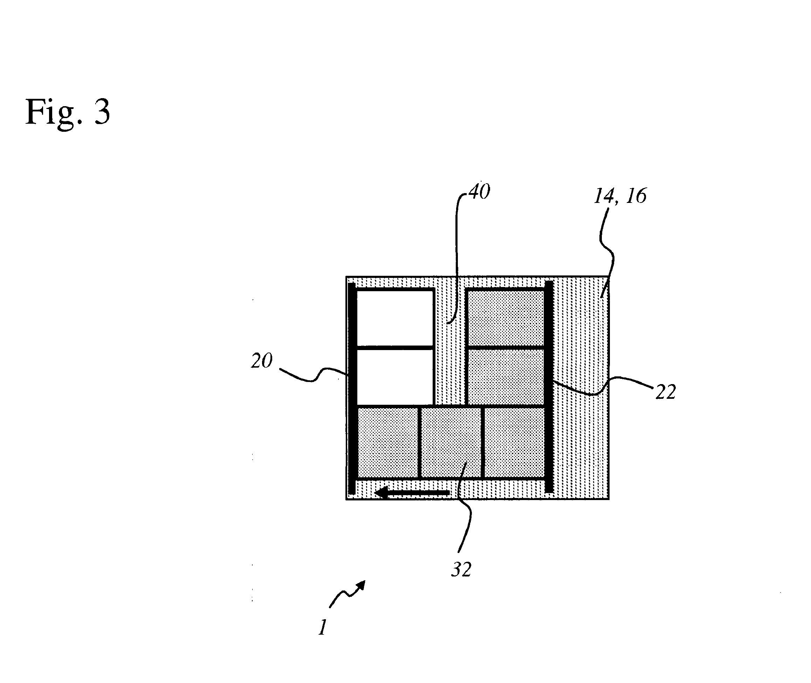

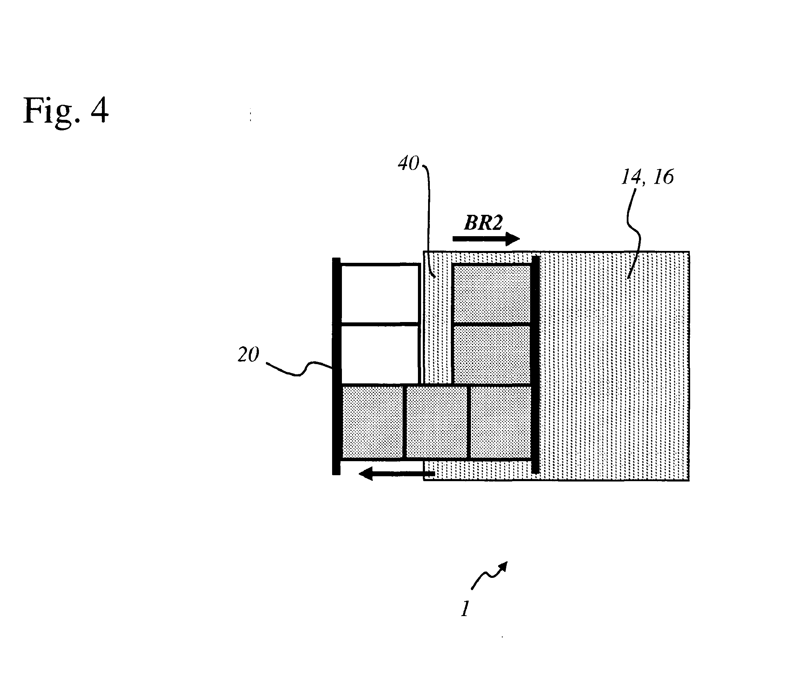

Wie den Figuren 3 und 4 entnommen werden kann, ist die erwähnte Lückenbildung auf durch einen selektiven Antrieb von Teilbereichen der Auflageebene 14 während der Rückzugsbewegung möglich. Bei dieser Variante wird die weitgehend lückenlose Gebindelage zunächst positioniert und an das Überschubelement 20 positioniert, während bei der Rückbewegung des Beladewagens 14 die unterhalb der hinteren Gebinden 12 befindlichen Auflageelemente 16 in der gewünschten Weise angetrieben werden, so dass diese Gebinde 12 die Lücke 40 ausbilden.

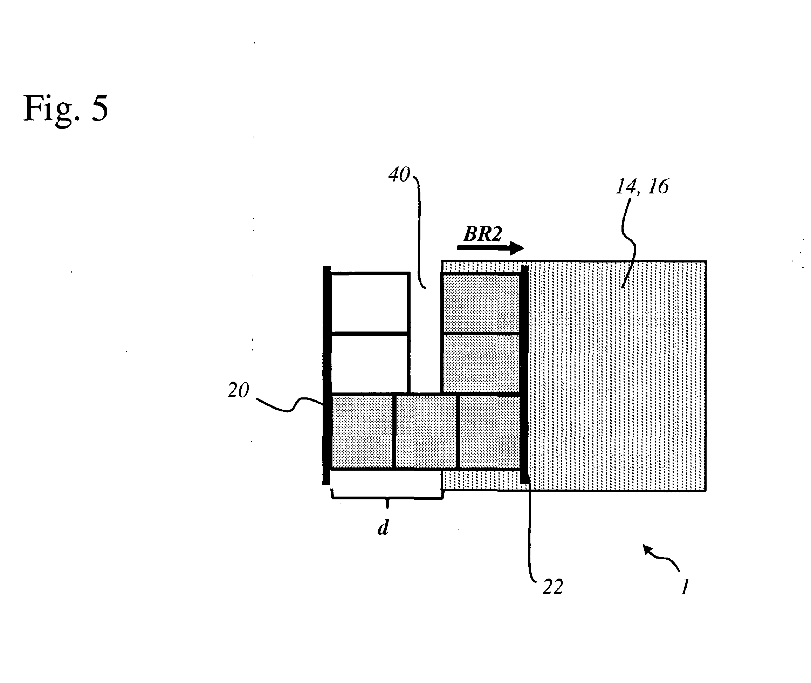

Nach einer definierten Wegstrecke d, auf der sich der Beladewagen 14 in Bewegungsrichtung BR2 von der Ablageposition weg bewegt, wird die angetriebene Oberfläche / werden die angetriebenen Auflageelemente 16 des Beladewagen 14 abgeschaltet oder die Bewegungsrichtung dieser Oberfläche entgegengesetzt der ursprünglichen Laufrichtung geändert, so dass sich die angetriebenen Auflageelemente 16 zusammen mit dem Beladewagen 14 in Bewegungsrichtung BR2 von der Palette 10 und dem Überschubelement 20 weg bewegen (Fig. 5). Somit bewegen sich die restlichen Stückgüter 12, 13 auf der Oberfläche 16 in Richtung des verschiebbaren

Überschubelementes 22, während der Beladewagen 14 weiter in Bewegungsrichtung BR2 von der Ablageposition weg bewegt wird.

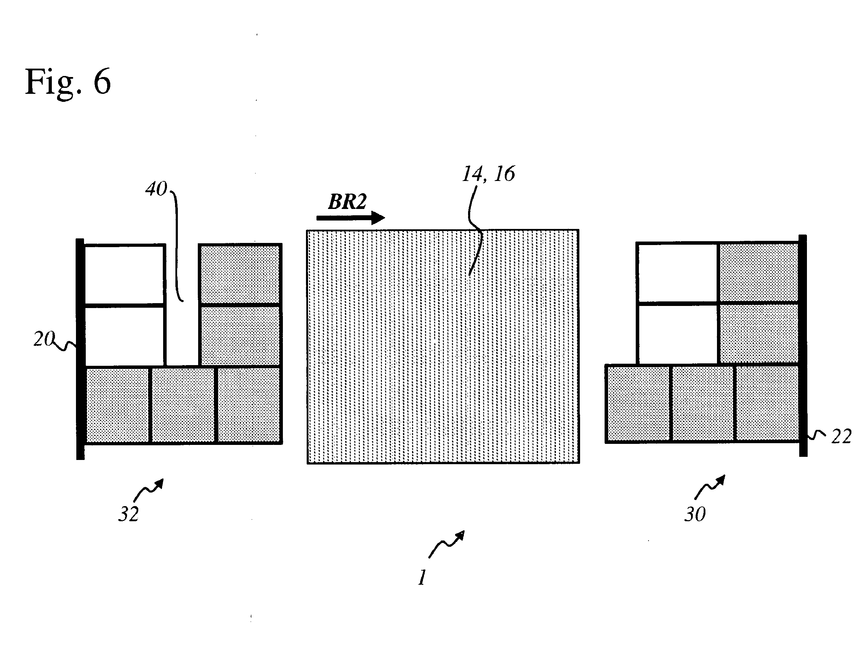

Die Gebinde 12, 13 legen sich an die Kontur des verschiebbaren Überschubelementes 22 an. Ist der Beladewagen 14 vollständig aus der Gebindelage 12, 13 herausgefahren, liegen die Gebinde 12, 13 mit einer linearen Außenkontur auf der Palette 10 bzw. auf bereits vorher abgelegten Stückgutlagen 12, 13 (Fig. 6). Bei der Übernahme einer weiteren Gebindelage 12, 13 wird das Überschubelement 22 mit dem Beladewagen 16 weggefahren und bei der Palettierung einer neuen Lage wieder verwendet. Der Beladewagen 16 steht somit für die Aufnahme einer neuen Ausgangslage 32 bereit, die auf der palettierten Lage 30 angeordnet wird. Hierfür kann insbesondere vorgesehen sein, dass der Beladewagen 14 in der Höhe verstellbar ist. Die Höhenverstellung kann beispielsweise hydraulisch oder pneumatisch oder auch motorisch, insbesondere elektromotorisch, erfolgen. Insbesondere können Sensoren vorgesehen sein, die die Höhe des Stapels an Lagen 30 auf der Palette 10 erkennen und die Höhe des Beladewagens 14 entsprechend einstellen. Gemäß einer weiteren Ausführungsform kann die Verstellung der Höhe des Beladewagens 14 auch nach einem eingestellten Programm erfolgen, da die Höhe der Gebindelagen 30 bekannt und die Gesamthöhe auf der Palette 10 somit einfach zu errechnen ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung zur Handhabung von Artikeln, Stückgut, Gebinden
- 10: Palette
- 12: Artikel, Stückgut, Gebinde
- 13: Artikel, Stückgut, Gebinde
- 14: bewegliche Auflageebene / Beladewagen
- 16: Auflageelement
- 20: erstes Überschubelement / Abstreifer / Anschlag
- 22: zweites Überschubelement / Abstreifer / Anschlag
- 30: Ausgangs- Lage der Artikel, Stückgut, Gebinde
- 32: End- Lage der Artikel, Stückgut, Gebinde

- BR1: erste Bewegungsrichtung
- BR2: zweite Bewegungsrichtung
- d: definierte Distanz

## Patentansprüche

1. Verfahren zur Handhabung von Artikeln, Stückgütern oder Gebinden (12, 13) und zu deren Lagenbildung beim Beladen von Paletten (10) oder beim Stapeln der Artikel, Stückgüter oder Gebinde (12, 13), bei dem die in jeweils wenigstens eine Lage (30, 32) abzulegenden und/oder zu stapelnden Artikel, Stückgüter oder Gebinde (12, 13) mittels einer beweglichen Auflageebene (14), die zumindest abschnittsweise über antreibbare und/oder die Artikel, Stückgüter oder Gebinde (12) in eine definierte Richtung bewegende Auflageelemente (16) verfügt, und mittels wenigstens eines an einer Längsseite der Auflageebene angeordneten Überschubelementes (20) zur Bildung eines Anschlags für die Artikel-, Stückgut- oder Gebindelage (12, 13) und/oder zu deren Überschub in Transportrichtung auf eine Zielposition auf der Palette (10) oder dem Stapel befördert werden, wobei die auf der Zielposition abgelegte wenigstens eine Lage (32) von Artikeln, Stückgütern oder Gebinden (12, 13) durch Antreiben eines Teils der Auflageelemente (16) in Richtung (BR2) einer seitlichen Anlagekante (22) unter Ausbildung einer innerhalb der Zielposition befindlichen Lücke (40) zwischen benachbarten Artikeln, Stückgütern oder Gebinden (12, 13) während der Positionierung und/oder des Zurückziehens der Auflageebene (14) unter Ausbildung einer bis an die Ränder der Zielposition bzw. Lage reichenden Außenkontur ausgerichtet werden,
**dadurch gekennzeichnet, dass**
die Auflageelemente (16) der Auflageebene (14) durch drehbare und angetriebene Rollen gebildet sind, die gemeinsam oder
gruppenweise jeweils in gleichem Drehsinn variabel gesteuert und angetrieben werden, wobei die Laufrichtung der angetriebenen Rollen (16) während des Zurückziehens der Auflageebene (14) in Bewegungsrichtung (BR2) nach einer definierten Wegstrecke geändert wird, wodurch sich die Artikel, Stückgüter oder Gebinde (12, 13) an die seitlichen Anlagekante (22) anlegen.

2. Verfahren nach Anspruch 1, bei dem eine Lage (32) von mehreren auf der Auflageebene (14) befindlichen Artikeln, Stückgütern oder Gebinden (12, 13) durch Überschieben der Auflageebene (14) über die Zielposition bei angetriebenen Rollen (16) und durch anschließendes Zurückziehen der Auflageebene (14) unter gleichzeitigem Antreiben zumindest eines Teils der Rollen (16), in einer entgegen der Rückzugsrichtung (BR2) der Auflageebene (14) gerichteten Umdrehungsrichtung (BR1) und schneller angetrieben, als sich die Auflageebene (14) in Richtung (BR2) nach einer definierten Wegstrecke bewegt, sowie unter gleichzeitiger Anlage der an das gegenüber der Zielposition fest stehende Überschubelement (20) angrenzenden Artikel, Stückgüter oder Gebinde (12, 13) abgelegt wird, bevor die Änderung der Bewegungsrichtung der Rollen (16) erfolgt.

3. Vorrichtung zur Handhabung von Artikeln, Stückgütern oder Gebinden (12, 13) und zu deren Lagenbildung beim Beladen von Paletten (10) oder beim Stapeln der Artikel, Stückgüter oder Gebinde (12, 13), mit einer beweglichen Auflageebene (14) für jeweils mindestens eine Lage (32) der abzulegenden und/oder zu stapelnden Artikel, Stückgüter oder Gebinde (12, 13), deren Auflageebene zumindest abschnittsweise über antreibbare und/oder die Artikel, Stückgüter oder Gebinde (12, 13) in eine definierte Richtung verschiebende Auflageelemente (16) verfügt, und der zumindest ein an einer Längsseite der Auflageebene (14) angeordnetes Überschubelement (20, 22) zur Bildung eines Anschlags für die auf eine Zielposition zu befördernden Artikel-, Stückgut- oder Gebindelage (32) und/oder zu deren Überschub in Transportrichtung auf die Zielposition auf der Palette (10) oder dem Stapel zugeordnet ist,
**dadurch gekennzeichnet, dass**
die Auflageelemente (16) der Auflageebene (14) durch drehbare und antreibbare Rollen ausgebildet sind, die gemeinsam oder gruppenweise ansteuer- und antreibbar und in deren Bewegungsrichtung veränderbar sind, und dass eine Steuerung angeordnet ist, wobei die Steuerung programmiert ist, so dass die Laufrichtung der angetriebenen Rollen (16) während des Zurückziehens der Auflageebene (14) in Bewegungsrichtung (BR2) nach einer definierten Wegstrecke geändert wird, wodurch sich die Artikel, Stückgüter oder Gebinde (12, 13) an eine seitlichen Anlagekante (22) anlegen.

4. Vorrichtung nach Anspruch 3, bei der das Überschubelement (20) durch einen parallel zur Auflageebene bewegbaren Überschubbalken zur Anlage der daran grenzenden Artikel, Stückgüter oder Gebinde (12, 13) gebildet ist.

## Claims

1. Method for handling articles, piece goods or bundles (12, 13) and for forming layers thereof in the process of loading pallets (10) or stacking the articles, piece goods or bundles (12, 13), with said method involving the articles, piece goods or bundles (12, 13) intended for being deposited and/or stacked in at least one respective layer (30, 32) to be conveyed by means of a movable support surface (14), which at least in sections comprises support elements (16), which are drivable and/or move the articles, piece goods or bundles (12) in a defined direction, and by means of at least one transfer element (20) arranged at one longitudinal side of the support surface (14), said transfer element (20) forming a stop for the layer (30, 32) of articles, piece goods or bundles (12, 13) and/or being used for transferring the said articles, piece goods or bundles (12, 13) in transportation direction to a target position on the pallet (10) or the stack, wherein the articles, piece goods or bundles (12, 13) in the at least one layer (32) deposited at the target position are aligned by driving a part of the support elements (16) in the direction (BR2) toward a lateral stop edge (22) and in the process forming a gap (40) between adjacent articles, piece goods or bundles (12, 13), said gap being located within the target position, while positioning and/or retracting the support surface (14) and in the process forming an outer contour that reaches the edges of the target position or the layer (32), **characterised in that**
the support elements (16) of the support surface (14) are formed by rotatable and driven rollers, which are variably controlled and driven together or groupwise in each case in the same direction of rotation,
wherein the direction of travel of the driven rollers (16) is changed during the process of retracting the support surface (14) in the direction of movement (BR2), after said support surface (14) has been retracted by a defined distance, whereby the articles, piece goods or bundles (12, 13) come to abut on the lateral stop edge (22).

2. Method according to claim 1 wherein a layer (32) of several articles, piece goods or bundles (12, 13) located on the support surface (14) is deposited so that it abuts on the articles, piece goods or bundles (12, 13) that are adjacent to the transfer element (20), which is fixedly arranged opposite the target position, said process of depositing being accomplished prior to changing the movement direction of the rollers (16) and by transferring the support surface (14) across the target position with the rollers (16) being driven and by subsequently retracting the support surface (14) while simultaneously driving at least a part of the rollers (16) in a rotational direction (BR1) running opposite to the retracting direction (BR2) of the support surface (14), and faster than the movement of the support surface (14) in the direction (BR2) after said support surface (14) has been retracted by a defined distance.

3. Apparatus for handling articles, piece goods or bundles (12, 13) and for forming layers thereof in the process of loading pallets (10) or stacking the articles, piece goods or bundles (12, 13), having a movable support surface (14) in each case for at least one layer (32) of the articles, piece goods or bundles (12, 13) intended for being deposited and/or stacked, said support surface (14) comprising at least in sections support elements (16), which are drivable and/or shift the articles, piece goods or bundles (12) in a defined direction, with said support surface (14) being allocated at least one transfer element (20, 22) arranged at one longitudinal side of the support surface (14), said transfer element (20, 22) forming a stop for the layer (32) of articles, piece goods or bundles (12, 13) to be conveyed onto a target position, and/or being used for transferring the said layer (32) of articles, piece goods or bundles (12, 13) in transportation direction to a target position on the pallet (10) or the stack, **characterised in that**
the support elements (16) of the support surface (14) are formed by rotatable and drivable rollers, which can be controlled and driven together or groupwise and in variable movement directions, and **in that** a control is arranged wherein the control is programmed to change the direction of travel of the driven rollers (16) during the process of retracting the support surface (14) in the direction of movement (BR2) after said support surface (14) has been retracted by a defined distance, whereby the articles, piece goods or bundles (12, 13) come to abut on a lateral stop edge (22).

4. Apparatus according to claim 3 wherein the transfer element (20) is formed by a movable transfer bar, which is arranged in parallel to the support surface (14), and which serves as a stop for the articles, piece goods or bundles (12, 13) abutting on it.

## Revendications

1. Procédé destiné à la manipulation d'articles, de marchandises en détail ou de multipacks (12, 13) et à la formation de couches de ceux-ci lors du chargement de palettes (10) ou lors de l'empilage desdits articles, marchandises en détail ou multipacks (12, 13), dans lequel les articles, marchandises en détail ou multipacks (12, 13) à déposer respectivement en au moins une couche (30, 32) et/ou à empiler sont transportés sur une position cible sur la palette (10) ou la pile au moyen d'un plan mobil d'appui (14) qui dispose au moins par sections d'éléments d'appui (16) aptes à être entraînés et/ou déplaçant lesdits articles, marchandises en détail ou multipacks (12) dans une direction définie, et au moyen d'au moins un élément à faire pousser dessus (20) disposé sur un grand côté dudit plan d'appui et destiné à former une butée pour la couche d'articles, de marchandises en détail ou de multipacks (12, 13) et/ou à pousser celle-ci dessus dans la direction de transport, ladite au moins une couche (32) d'articles, de marchandises en détail ou de multipacks (12, 13) déposée sur ladite position cible étant agencée par entraînement d'une partie des éléments d'appui (16) dans la direction (BR2) d'un bord latéral d'appui (22), en formant une lacune (40) entre des articles, marchandises en détail ou multipacks (12, 13) voisins, située à l'intérieur de ladite position cible, durant le positionnement et/ou le retrait du plan d'appui (14) en formant un contour extérieur s'étendant jusqu'aux bords de la position cible ou bien couche, **caractérisé par le fait que** lesdits éléments d'appui (16) du plan d'appui (14) sont constitués par des rouleaux rotatifs et entraînés qui sont commandés et entraînés, d'une manière variable, ensemble ou par groupes respectivement dans le même sens de rotation, la direction de marche des rouleaux entraînés (16) étant modifiée durant le retrait du plan d'appui (14) dans la direction de mouvement (BR2), après un trajet défini, les articles, marchandises en détail ou multipacks (12, 13) prenant ainsi appui sur ledit bord latéral d'appui (22).

2. Procédé selon la revendication 1, dans lequel une couche (32) de plusieurs articles, marchandises en détail ou multipacks (12, 13) situés sur ledit plan d'appui (14) est déposée en faisant pousser ledit plan d'appui (14) sur la position cible, avec les rouleaux (16) entraînés, et en retirant ensuite ledit plan d'appui (14) tout en entraînant au moins une partie des rouleaux (16), entraînés dans une direction de rotation (BR1) opposée à la direction de retrait (BR2) du plan d'appui (14) et plus vite que ledit plan d'appui (14) se déplace dans la direction (BR2) après un trajet défini, ainsi que tout en ayant l'appui des articles, marchandises en détail ou multipacks (12, 13) contigus à l'élément à faire pousser dessus (20) fixe par rapport à la position cible, avant que le changement de la direction de mouvement des rouleaux (16) soit effectué.

3. Dispositif destiné à la manipulation d'articles, de marchandises en détail ou de multipacks (12, 13) et à la formation de couches de ceux-ci lors du chargement de palettes (10) ou lors de l'empilage desdits articles, marchandises en détail ou multipacks (12, 13), comprenant un plan mobil d'appui (14) pour respectivement au moins une couche (32) des articles, marchandises en détail ou multipacks (12, 13) à déposer et/ou à empiler, dont le plan d'appui dispose au moins par sections d'éléments d'appui (16) aptes à être entraînés et/ou déplaçant lesdits articles, marchandises en détail ou multipacks (12, 13) dans une direction définie, et auquel est associé au moins un élément à faire pousser dessus (20, 22) disposé sur un grand côté dudit plan d'appui (14) et destiné à former une butée pour la couche (32) d'articles, de marchandises en détail ou de multipacks à transporter sur une position cible, et/ou à pousser celle-ci dessus dans la direction de transport sur la position cible sur la palette (10) ou la pile, **caractérisé par le fait que** lesdits éléments d'appui (16) du plan d'appui (14) sont réalisés par des rouleaux aptes à être tournés et entraînés et qui sont aptes à être commandés et entraînés ensemble ou par groupes et à être modifiés dans le sens de mouvement de celui-ci, et qu'une commande est disposée, ladite commande étant programmée de sorte que la direction de marche des rouleaux entraînés (16) est modifiée durant le retrait du plan d'appui (14) dans la direction de mouvement (BR2), après un trajet défini, les articles, marchandises en détail ou multipacks (12, 13) prenant ainsi appui sur un bord latéral d'appui (22)

4. Dispositif selon la revendication 3, dans lequel ledit élément à faire pousser dessus (20) est constitué par une poutre à faire pousser dessus qui est déplaçable parallèlement au plan d'appui et destiné à l'appui des articles, marchandises en détail ou multipacks (12, 13) y contigus.
